# EUROPEAN PATENT SPECIFICATION

(11) **EP 3 786 601 B1**
(45) Date of publication and mention of the grant of the patent: **08.10.2025**
(21) Application number: 20192315.8
(22) Date of filing: 24.08.2020
(51) Int. Cl.: G01L 3/10

(54) **SYSTEM FOR MEASURING A TORQUE APPLIED TO A TRANSMISSION SHAFT AND VEHICLE COMPRISING SAID SYSTEM**
SYSTEM ZUR MESSUNG EINES DREHMOMENTS AUF EINER GETRIEBEWELLE UND FAHRZEUG MIT DIESEM SYSTEM
SYSTÈME DE MESURE D'UN COUPLE APPLIQUÉ À UN ARBRE DE TRANSMISSION ET VÉHICULE COMPRENANT LEDIT SYSTÈME

(30) Priority: 23.08.2019 IT 201900015003
(43) Date of publication of application: 03.03.2021
(73) Proprietor: CNH Industrial Italia S.p.A., 10156 Torino (IT)
(72) Inventor: Fiorati, Stefano, 44028 Poggio Renatico (Ferrara) (IT)
(74) Representative: CNH Industrial IP Department

(56) References cited:
- GB-A- 2 292 811
- US-A- 4 655 092
- US-A- 5 837 909

## Description

### Field of the invention

The present invention relates to the field of systems for measuring a torque applied to a transmission shaft and a vehicle, in particular an agricultural vehicle, comprising said system for measuring a torque.

### State of the Art

Agricultural vehicles are generally equipped with four-wheel drive propulsion. In addition, at least one power take-off (PTO) is intended to transmit motion to a user such as a rotary harrow or a baler or a flattener (scraper) or a waste compactor.

It is therefore evident that the torque generated by the internal combustion engine is generally distributed over four total users, including the two driving axles, the PTO and the hydraulic pump that feeds different users.

Situations may occur in which the entire torque can flow onto a single axle. This can lead to the failure of one of the transmission components, for example the pinion of the bevel gear of the same axle. Although it is possible to size axles and transmission shafts so as to be able to receive the entire nominal torque of the internal combustion engine, this would result in an unnecessary weighting of the agricultural vehicle.

A device for measuring the torque transmitted to a transmission shaft based is known, as disclosed for example in US4655092A. It is known as the strain gauge or the Anglo-Saxon formulation "strain gauge".

In particular, a measurement device based on a strain gauge, specific for transmission shafts, is known.

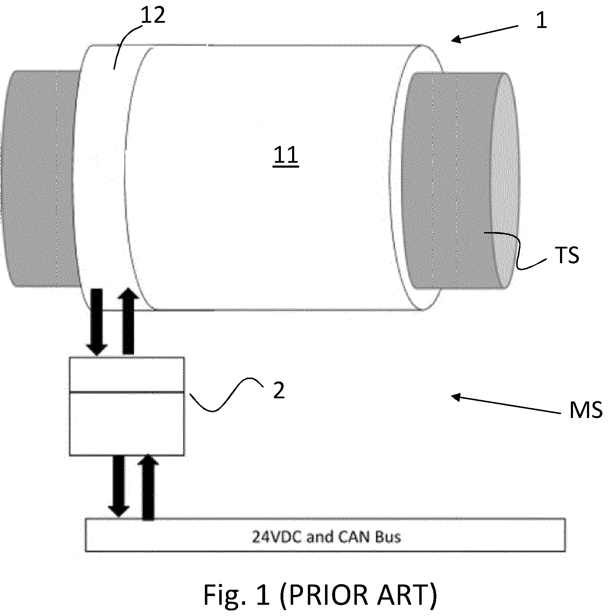

With reference to Figure 1 of the prior art, the measuring device is available on the market for torque measurement devices in the aeronautical field and in particular in the helicopter field. It comprises a movable part 1, i.e. a monobloc in the form of a sleeve, fixed to the transmission shaft TS, and a fixed part 2, stably connected to a fixed part of the vehicle, for example by means of a bracket connected directly or indirectly to the frame of the vehicle.

LORD Corporation ^{™} appears to be the main manufacturer of these measurement devices, but there are also others including Magcanica.

The movable part comprises a first portion 11, defined by the actual strain gauge, and a second portion 12, less broad than the first, intended to supply the strain gauge , to collect the measurements and transfer them to the fixed part 2, in wireless mode that is "wireless".

The generation of electrical energy necessary for supplying the movable part is achieved by magnetic coupling between the second movable portion 12 and the fixed portion 2.

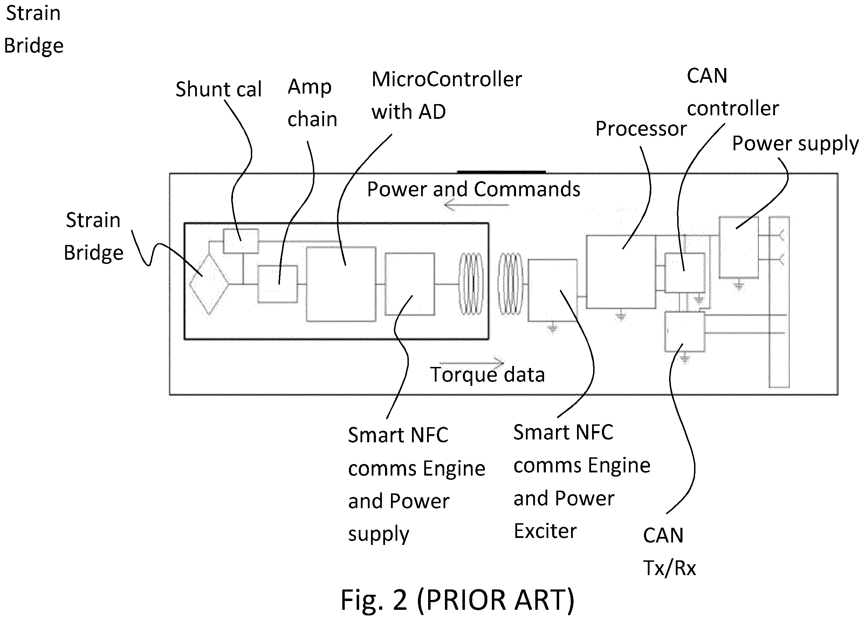

Figure 2 of the prior art shows an electrical and functional diagram of the measurement device shown in Figure 1, as conceived by the aforementioned company.

In the box marked as "Rotating Components" the functions performed by the mobile portion are indicated, while in the remaining part of the diagram the functionalities of the fixed part are indicated.

Beyond the peculiarities of the functionalities it is clear that the movable part performs the extension measurement and transmits it, wirelessly, to the fixed part. The fixed part receives the extension measurement and, if necessary, formats it so that it can be injected into a vehicle data network, for example CAN.

An electromagnetic coupling is also generated between the fixed part 2 and the second portion of the movable part 12, which allows to feed, always without the use of cables, the movable part in its entirety.

It is immediately understood that a reciprocal distance between the fixed part and the movable part must be within a predetermined interval, beyond which two undesired effects are obtained:
- The energy generated by magnetic coupling is drastically reduced,
- The error rate of the wireless transmission increases.

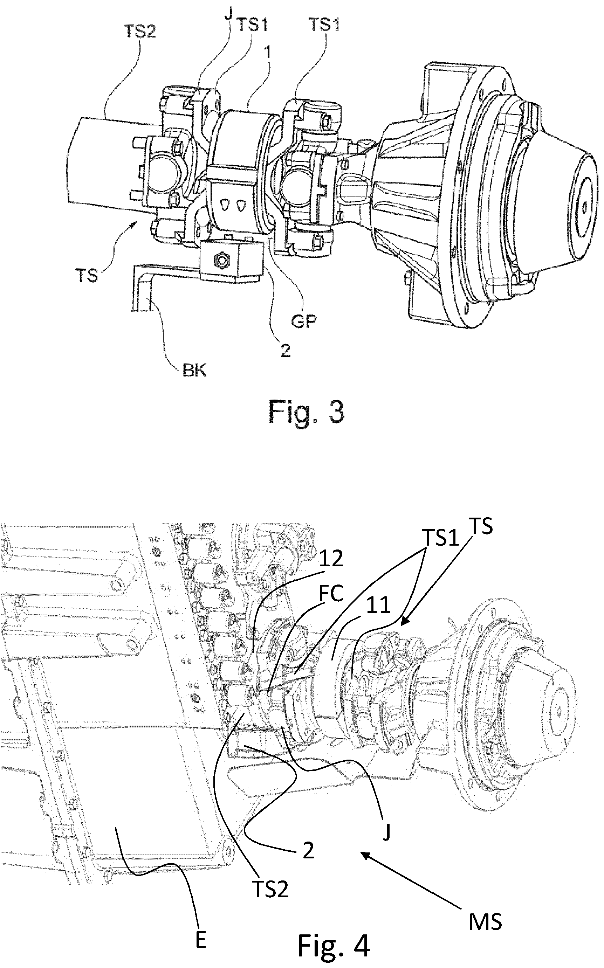

The transmission shafts of land vehicles, and in particular agricultural ones, unlike the aeronautical field, are equipped with at least one ball joint J, as shown in Figure 3, for example cardan. The portion of the transmission shaft that must be monitored is precisely that downstream of the ball joint. This implies that this portion of the transmission shaft is subject to sudden deflections, therefore it is not possible to keep the movable part of the measuring device in the distance interval with respect to the movable part.

By "deflection" it is meant that a first portion TS1 of the transmission shaft while being constrained in one end to a second portion TS2 of the transmission shaft by the joint J, results to deviate with respect to a coaxial direction with the second portion.

This, in fact, precludes the possibility of using the aforementioned technology, known in the aeronautical field, in the field of land vehicles and in particular of agricultural machines, and more generally where there is to monitor a transmission shaft subject to deflections.

Therefore, the solution shown in figure 3, although it appears to be a simple application of the device of figures 1 and 2, is not feasible and for this reason, the owner of the present invention knows no applications of such technology produced by Lord Corporation, with shafts of transmission like the one shown in figure 3.

In the context of transmissions equipped with spherical joints, a known solution provides for the use of coaxial friction discs, which once exceeded a predetermined torque, slip each other, limiting the torque delivered to the remaining transmission shaft. These devices are expensive and subject to frequent wear.

The contents of Figure 3, although referred to in this chapter, are not to be considered known art and therefore, in the detailed description, the same components will be referred to with the same reference signs.

GB2292811 discloses a torque sensor which shows mechanical stresses as a function of torque and to which the strain gauge arrangement is fitted. US4655092 shows a torque transducer coupling which has a torsion beam coupling an input to an output member. US5837909A discloses a hollow shaft of the type used in motor vehicles. A universal joint at one end of the shaft connects the hollow shaft with a differential. A torque measurement system comprises a four arm strain gauge bridge bonded to an interior of the shaft. A DC power supply supplies power to the strain gauge bridge through wires. An antenna is attached to the shaft and a stationary antenna is mounted on a fixture which is secured to a fixed portion of a vehicle.

### Summary of the invention

An object of the present invention is to present a real-time measurement system of the torque transmitted to a transmission axle having a portion subject to deflections.

The basic idea of the present invention is to physically separate the first portion from the second portion of the movable part of the measuring device, interconnecting them by means of a flexible cable.

In this way it is possible to position the second portion of the movable part, ie the one intended for the generation of electrical energy and the collection and transmission of data without wire, on a portion of a transmission shaft subject to pure rotation, that is to say not subject with deflections, and the first portion of the movable part on the shaft being monitored and measured for the torque received by a propulsion motor.

Therefore, the present invention relates to a measurement device based on an strain gauge, which is connected to the part dedicated to supplying and transmitting the data collected by means of a flexible cable.

The present invention also relates to a method of use of the measuring device described above, according to which the part which is functionally dedicated to supplying and transmitting the collected data is positioned on a portion of the transmission shaft subjected to pure rotation, while the strain gauge it is positioned on the portion of the transmission shaft subject to deflections.

"Pure rotation" means a rotation of a shaft around a fixed axis of rotation. The fixed term must be related to the vehicle. Therefore, this axis of rotation is fixed for example with respect to a gearbox. Since the vehicle is destined to move, it is clear that the rotation axis also moves accordingly.

In other words, the movable, monolithic part, offered by the known art is broken into two physically separate parts, each having its own casing and the two parts obtained are subsequently interconnected electrically by a flexible cable.

The invention also relates to a transmission shaft comprising a ball joint which divides a first portion of the transmission shaft from a second portion of the transmission shaft, wherein said flexible cable is arranged inside the ball joint. This is particularly advantageous in order to limit the exposure of the same flexible cable to the external environment and to limit the centrifugal force applied to the same cable.

Although the invention concerns two long-limbed elements interconnected by means of a ball joint, the set of these elements is defined, however, as a tree, by virtue of the fact that the deflections are modest with respect to the overall length of the assembly.

Also part of the present invention is a vehicle, in particular an agricultural vehicle, comprising a transmission shaft equipped with a ball joint and a measurement system as described above.

In the context of the present description, when it is said that a movable part is fixed on a portion of a transmission shaft, this implies that this movable part rotates with this portion of shaft remaining integral with one another.

The dependent claims describe preferred variants of the invention, forming an integral part of the present description.

### Brief description of the figures

Further aims and advantages of the present invention will become clear from the following detailed description of an embodiment of the same (and its variants) and from the annexed drawings given purely as an explanatory and non-limiting example, in which:
Figure 1 of the prior art shows a schematic example of a torque measuring device applied to a transmission shaft based on a strain gauge;
Figure 2 shows an electrical / functional example of the device according to claim 1;
Figure 3 shows the application of the known art measuring device to a transmission shaft equipped with a ball joint;
Figure 4 shows the application of a device according to the present invention applied to a transmission shaft equipped with a ball joint as in Figure 3;
Figure 5 shows a preferred variant of the present invention;
Figure 6 shows an agricultural vehicle comprising the aforementioned transmission shaft and the aforementioned measuring device according to the present invention;
Figure 7 shows an example of a flexible cable used in the present invention.

"Measurement device", for convenience, means "device for measuring a torque applied to a transmission shaft". The same numbers and the same reference letters in the figures identify the same elements or components. For an easier understanding of the invention the same signs and symbols are used for the figures taken from the known art and for the example ones of the present invention. In the present description the term "second" component does not imply the presence of a "first" component. These terms are in fact used as labels to improve clarity and should not be understood in a limiting way.

The elements and characteristics illustrated in the various preferred embodiments, including the drawings, can be combined with each other without, however, departing from the scope of protection of the present application as described below.

### Detailed description of exemplary embodiments

Figure 4 shows an example of implementation of the present invention.

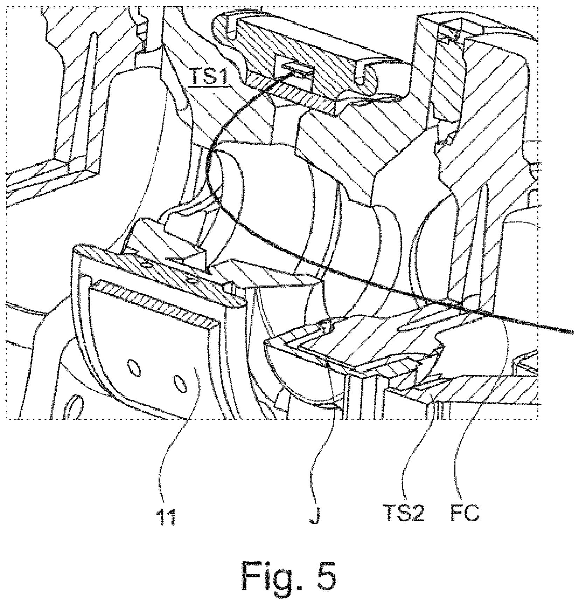

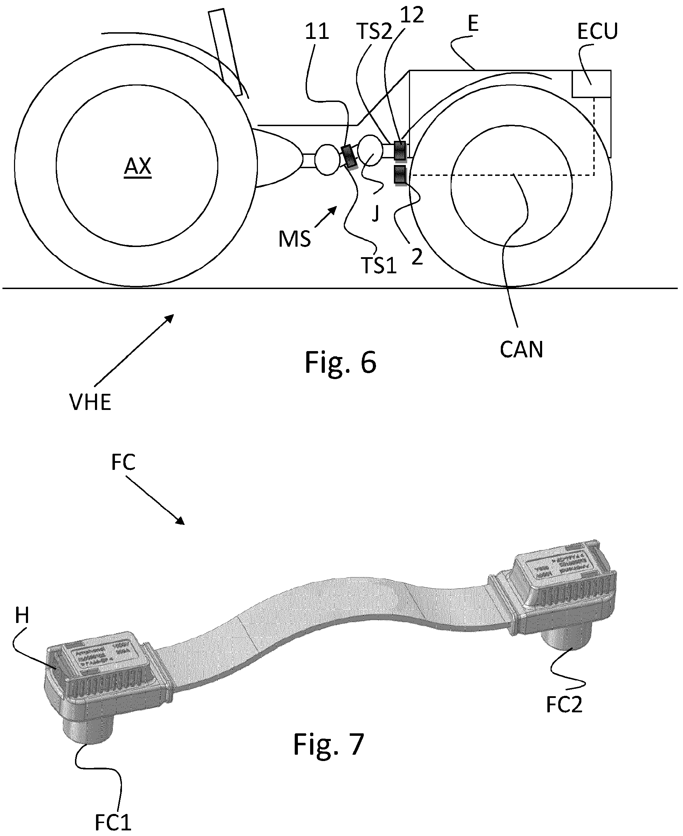

Figure 5 shows a preferred variant of the present invention. While, Figure 6 shows a vehicle VHE, for example an agricultural vehicle, which comprises a propulsion engine E, a processing unit ECU for controlling the propulsion engine E. Furthermore, the vehicle comprises two axles, of which, one or both they can be drivers and a PTO to guide a user.

The object of the present invention is to monitor and preferably safeguard any transmission. According to a preferred application, the purpose is to avoid breaking the pinion of the bevel gear torque of at least one driving axle. Preferably, the present invention is applied to all driving axles and also to the PTO.

It should be taken into account that the present invention can be used, for example, on a PTO of a heavy vehicle for waste collection in order to monitor the drive torque offered to the waste compactor.

Preferably, the present invention is applied to a high-powered agricultural, wheeled or crawler tractor for towing applications characterized by articulation and central transmission. The torque is transmitted to the front and rear axles which are connected to a common transmission output shaft.

The present invention relates to an MS device for measuring the torque applied to a transmission shaft TS of a vehicle, in which the transmission shaft is provided with a ball joint J which identifies, on opposite sides of the joint, a first portion TS1 of the transmission shaft subject to rotation with deflections and a second portion TS2 of the transmission shaft subjected to rotation only, remaining coaxial with its own longitudinal development axis.

The measuring device includes
- a movable part 1, configured to be fixed on the transmission shaft and comprising a strain gauge 11, means 12 for strain gauge feed and for collecting and transmitting extension measurements generated by said strain gauge ,
- a fixed part 2, configured to be fixed to a fixed part of the vehicle and to face said movable part to cooperate with said means 12 in feeding the movable part and to receive the extension measurements.

According to the present invention, the measuring device comprises a flexible cable FC adapted to interconnect the strain gauge and the means 12, so as to allow the fixing of the strain gauge on the first portion TS1 of the transmission shaft and the means 12 on the second portion TS2 of the transmission shaft.

The two portions 11 and 12 of the movable part each have an annular shape, for example of a sleeve, particularly suitable for being fitted on cylindrical or tubular shafts. The strain gauge is configured to detect torsional deformations of the portion of the shaft on which it is applied.

Advantageously, a distance GP between the power supply and transmission means 12 and said fixed part 2 remains substantially constant in any operating condition of the transmission shaft TS.

The attribute "substantially" in the expression "substantially constant" considers the flexibility of the bracket supporting the fixed part subjected to vibration caused by the vehicle motion and engine working.

The flexible cable FC, as shown in Figure 7, comprises opposite ends FC1, FC2 equipped with a quick coupling H and in which the strain gauge 11 and the means 12 comprise complementary outlets with the quick coupling. In particular, it is envisaged that one end of the cable can be released from a respective seat, only by pressing a suitable tab H which unlocks the plug FC1 or FC2 from the relative socket (not shown). This ensures a firm hold of the cable in place, ie preventing it from coming off due to centrifugal force.

In addition, the cable has a length that is a function of the size of the J ball joint and a relative maximum deflection angle. According to the claimed subject-matter, the cable FC is sized so as to have a length strictly necessary to connect the aforesaid parts taking into account the mutual deflections between the two opposite parts TS1 and TS2. A transmission shaft TS for a vehicle according to the present invention is provided with a ball joint J which identifies, on opposite sides of the joint, a first portion TS1 of the transmission shaft subjected to rotation with deflections and a second portion TS2 of the transmission shaft subjected to pure rotation, i.e. with a stationary rotation axis, and an MS device for measuring a torque applied to the transmission shaft TS.

According to a preferred variant of the invention, the ball joint comprises a through opening for housing the flexible cable FC and the flexible cable interconnects the strain gauge and the means 12 passing internally to the first TS1 and second portion TS2 of the transmission shaft, through said through opening.

The propulsion engine E can be any motor, electric or an internal combustion engine or a combination of an internal combustion engine and an electric motor.

The processing unit ECU is configured to control said propulsion motor and a vehicular data network CAN interconnecting the fixed part (2) of the measuring device MS with the processing unit ECU, so as to exchange data with each other through the data network CAN vehicle.

According to a preferred variant of the invention, the processing unit is configured to limit a torque applied to the transmission shaft TS by controlling the torque delivered by the propulsion motor on the basis of at least one torque measurement performed by said device (MS) of torque measurement.

In other words, a so-called "derating" is performed, ie a weakening of the propulsion motor in order to avoid damaging the transmission shaft or any device driven by it in rotation.

The present invention also relates to a method of controlling a torque applied to a transmission shaft TS of a vehicle by a propulsion motor, comprising the steps of measuring a torque applied to the transmission shaft and limiting a torque generated by the propulsion motor according to the measured torque; the transmission shaft being provided with a ball joint J which identifies, on opposite sides of the joint, a first portion TS1 of the transmission shaft subjected to rotation with deflections and a second portion TS2 of the transmission shaft subjected to rotation only around to a fixed rotation axis.

The method includes the following preliminary steps for installing an MS measuring device as described above:
- first fixing of the strain gauge 11 on said first portion TS1 of the transmission shaft,
- second fixing of the means 12 for feeding, collecting and transmitting extension measurements generated by the strain gauge , on said second portion TS2 of the transmission shaft,
- third fixing of the fixed part 2 on a fixed part of the vehicle so as to face said means 12 for feeding and collecting measurements;
- interconnection of the strain gauge 11 with said means 12 for supplying collection and transmission of measurements, by means of a flexible cable FC.

It is clear that it is needed providing the strain gauge with a socket for such cable FC.

It is evident that it is necessary to provide the means 12 with a casing which preserves the on-board electronics from humidity in addition to a socket for the aforementioned FC cable

Preferably, the interconnection is achieved by passing said flexible cable through said ball joint so that the flexible cable remains inside the transmission shaft.

According to a preferred variant of the invention, the processing unit ECU is configured to identify a distribution of the weights on the vehicle, comparing the pairs distributed simultaneously on two or more axles driving the vehicle when the vehicle is level. More in particular, when a first torque distributed on a first axle is greater than a second torque distributed on a second axle of a predetermined threshold, then the processing unit is configured to signal to a driver of the vehicle an incorrect weight distribution between the two or more vehicle axles.

The signaling can be carried out by means of a warning on a display on the dashboard or by means of a warning light.

It is worth highlighting that the processing units are generally connected to a sensor, for example a gyroscope, capable of detecting an orientation of the vehicle in space, therefore the present weight distribution control is easily achievable thanks to the present invention.

The term "when" which expresses a necessary condition must be interpreted as "only when".

Possible embodiments of the non-limiting example described are possible, without thereby departing from the scope of protection of the present invention, as defined by the appended claims.

From the description given above, the person skilled in the art is able to carry out the object of the invention without introducing further construction details.

## Claims

1. Transmission shaft (TS) of a vehicle comprising a device (MS) for measuring a torque applied to said transmission shaft (TS), the transmission shaft having a ball joint (J) identifying, on opposite sides of the joint, a first portion (TS1) of the transmission shaft subjected to rotation with deflections and a second portion (TS2) of the transmission shaft subjected to rotation only about its own axis of fixed longitudinal development, the measuring device comprising
- a movable part (1), configured to be fixed on and to rotate with the transmission shaft and comprising a strain gauge (11), means (12) for energy supplying the strain gauge and for collecting and transmitting extension measurements generated by said strain gauge (11),
- a fixed part (2), configured to be attached to a fixed part of the vehicle and to face said movable part to cooperate with said means (12) for energy supplying of the movable part and to receive the extension measurements,
said device (MS) comprising a flexible cable (FC) adapted to interconnect said strain gauge and said means (12), said strain gauge (11) being attached on said first portion (TS1) of the transmission shaft and said means (12) on said second portion (TS2) of the transmission shaft so that a distance (GP) between said means (12) and said fixed part (2) remains substantially constant in any operating condition of the transmission shaft (TS), wherein said flexible cable (FC) comprises opposed ends provided with a quick coupling and in which said strain gauge (11) and said means (12) comprise complementary sockets with said rapid connection, said cable is sized so as to have a length strictly necessary to connect the aforesaid parts taking into account the mutual deflections between the two opposite portions (TS1, TS2).

2. Shaft according to claim 1, wherein said ball joint comprises a through opening for housing said flexible cable (FC) and said flexible cable interconnects the strain gauge and the means (12) passing internally to the first (TS1) and second portion (TS2) of the transmission shaft, through said through opening.

3. Vehicle (VHE), in particular an agricultural tractor, comprising
. a propulsion engine (E),
. a transmission shaft (TS) according to any one of claims 1 or 2 for transferring a rotary motion from said propulsion motor to a wheel or an axle (AX) or to a PTO of the vehicle and
. a processing unit (ECU) configured to control said propulsion engine and
. an interconnected vehicular data network (CAN) connecting said fixed part (2) with said processing unit (ECU),
and in which the processing unit and the fixed part (2) are configured to reciprocally exchange data through the vehicular data network.

4. Vehicle according to claim 3, wherein said processing unit is configured to limit a torque applied to said transmission shaft by controlling said propulsion motor on the basis of at least one torque measurement performed by said torque measuring device (MS).

5. Vehicle according to claim 3 or 4, comprising at least two drive axles driven by a respective transmission shaft according to claim 4, and wherein said processing unit is configured to identify a weight distribution by comparing the pairs distributed simultaneously on said at least two towing axles of the vehicle when the vehicle is level.

6. A vehicle according to claim 5, wherein when a first torque distributed on a first axle is greater than a second torque distributed on a second axle of a predetermined threshold, then said processing unit is configured to signal to a driver of the vehicle a incorrect weight distribution between the at least two towing axles of the vehicle.

7. Method of controlling a torque applied to a transmission shaft (TS) of a vehicle by a propulsion engine, comprising the steps of measuring a torque applied to the transmission shaft and limiting a torque generated by the engine of propulsion according to the measured torque; the transmission shaft being provided with a ball joint (J) identifying, on opposite sides of the joint, a first portion (TS1) of the transmission shaft subjected to rotation with deflections and a second portion (TS2) of the shaft of transmission subject to rotation only around a fixed rotation axis,
the method comprising the following preliminary steps for providing a transmission shaft according to claim 1:
- first fixing of the strain gauge (11) on said first portion (TS1) of the transmission shaft,
- second fixing of the feeding means (12), collection and transmission of extension measurements generated by the strain gauge, on said second portion (TS2) of the transmission shaft,
- third fixing of the fixed part (2) on a fixed part of the vehicle so as to face said means (12) for feeding and collecting measurements;
- interconnection of the strain gauge (11) with said means (12) for the collection and transmission of measurements, using a flexible cable (FC).

8. Method according to claim 7, wherein said interconnection is achieved by passing said flexible cable through said ball joint so that the flexible cable remains inside the transmission shaft.

## Patentansprüche

1. Getriebewelle (TS) eines Fahrzeugs, umfassend eine Vorrichtung (MS) zum Messen eines auf die Getriebewelle (TS) ausgeübten Drehmoments, wobei die Getriebewelle ein Kugelgelenk (J) aufweist, das auf gegenüberliegenden Seiten des Gelenks einen ersten Abschnitt (TS1) der Getriebewelle, der einer Rotation mit Durchbiegungen unterliegt, und einen zweiten Abschnitt (TS2) der Getriebewelle, der ausschließlich einer Rotation um seine eigene Achse mit fester Längsausdehnung unterliegt, definiert, wobei die Messvorrichtung umfasst:
einen beweglichen Teil (1), der dazu eingerichtet ist, an der Getriebewelle befestigt zu werden und sich mit dieser zu drehen, und einen Dehnungsmessstreifen (11), Mittel (12) zur Energieversorgung des Dehnungsmessstreifens sowie zum Erfassen und Übertragen von durch den Dehnungsmessstreifen (11) erzeugten Dehnungsmesswerten umfasst,
einen feststehenden Teil (2), der dazu eingerichtet ist, an einem festen Teil des Fahrzeugs angebracht zu werden und dem beweglichen Teil gegenüberzuliegen, um mit den Mitteln (12) zur Energieversorgung des beweglichen Teils zusammenzuwirken und die Dehnungsmesswerte zu empfangen,
wobei die Vorrichtung (MS) ein flexibles Kabel (FC) umfasst, das dazu geeignet ist, den Dehnungsmessstreifen und die Mittel (12) miteinander zu verbinden, wobei der Dehnungsmessstreifen (11) an dem ersten Abschnitt (TS1) der Getriebewelle angebracht ist und die Mittel (12) an dem zweiten Abschnitt (TS2) der Getriebewelle angebracht sind, sodass in jedem Betriebszustand der Getriebewelle (TS) ein Abstand (GP) zwischen den Mitteln (12) und dem feststehenden Teil (2) im Wesentlichen konstant bleibt, wobei das flexible Kabel (FC) gegenüberliegende Enden aufweist, die mit einer Schnellkupplung ausgerüstet sind, und wobei der Dehnungsmessstreifen (11) und die Mittel (12) komplementäre Kupplungen mit dieser Schnellverbindung umfassen, wobei das Kabel so bemessen ist, dass es lediglich die zur Verbindung der vorgenannten Teile notwendige Länge unter Berücksichtigung der gegenseitigen Durchbiegungen zwischen den beiden gegenüberliegenden Abschnitten (TS1, TS2) aufweist.

2. Welle nach Anspruch 1, wobei das Kugelgelenk eine Durchgangsöffnung zur Aufnahme des flexiblen Kabels (FC) umfasst und wobei das flexible Kabel den Dehnungsmessstreifen und die Mittel (12) miteinander verbindet, indem es innerhalb des ersten Abschnitts (TS1) und des zweiten Abschnitts (TS2) der Getriebewelle durch die Durchgangsöffnung verläuft.

3. Fahrzeug (VHE), insbesondere ein landwirtschaftlicher Traktor, umfassend
einen Antriebsmotor (E),
eine Getriebewelle (TS) gemäß einem der Ansprüche 1 oder 2 zur Übertragung einer Drehbewegung von dem Antriebsmotor auf ein Rad oder eine Achse (AX) oder auf eine Zapfwelle (PTO) des Fahrzeugs, und
eine Verarbeitungseinheit (ECU), die dazu eingerichtet ist, den Antriebsmotor zu steuern, und
ein vernetztes Fahrzeug-Datennetzwerk (CAN), das den feststehenden Teil (2) mit der Verarbeitungseinheit (ECU) verbindet und in dem die Verarbeitungseinheit und der feststehende Teil (2) dazu eingerichtet sind, über das Fahrzeug-Datennetzwerk gegenseitig Daten auszutauschen.

4. Fahrzeug nach Anspruch 3, wobei die Verarbeitungseinheit dazu eingerichtet ist, ein auf die Getriebewelle ausgeübtes Drehmoment durch Steuern des Antriebsmotors auf Grundlage mindestens einer durch die Drehmoment-Messvorrichtung (MS) durchgeführten Drehmomentmessung zu begrenzen.

5. Fahrzeug nach Anspruch 3 oder 4, umfassend mindestens zwei Antriebsachsen, die jeweils von einer Getriebewelle gemäß Anspruch 4 angetrieben werden, wobei die Verarbeitungseinheit dazu eingerichtet ist, eine Gewichtsverteilung durch Vergleichen der gleichzeitig auf die mindestens zwei Antriebsachsen des Fahrzeugs verteilten Drehmomente bei ebenem Fahrzeug zu erkennen.

6. Fahrzeug nach Anspruch 5, wobei, wenn ein erstes auf eine erste Achse verteiltes Drehmoment um einen vorgegebenen Schwellenwert größer als ein zweites auf eine zweite Achse verteiltes Drehmoment ist, die Verarbeitungseinheit dazu eingerichtet ist, einem Fahrer des Fahrzeugs eine fehlerhafte Gewichtsverteilung zwischen den mindestens zwei Antriebsachsen des Fahrzeugs anzuzeigen.

7. Verfahren zum Steuern eines Drehmoments, das durch einen Antriebsmotor auf eine Getriebewelle (TS) eines Fahrzeugs ausgeübt wird, umfassend die Schritte:
Messen eines auf die Getriebewelle ausgeübten Drehmoments und Begrenzen eines Drehmoments, das durch den Antriebsmotor erzeugt wird, in Abhängigkeit vom gemessenen Drehmoment; wobei die Getriebewelle ein Kugelgelenk (J) aufweist, das auf gegenüberliegenden Seiten des Gelenks einen ersten Abschnitt (TS1) der Getriebewelle, der einer Rotation mit Durchbiegungen unterliegt, und einen zweiten Abschnitt (TS2) der Getriebewelle, der ausschließlich einer Rotation um eine feste Rotationsachse unterliegt, definiert,
wobei das Verfahren folgende vorbereitende Schritte zum Bereitstellen einer Getriebewelle gemäß Anspruch 1 umfasst:
erstes Befestigen des Dehnungsmessstreifens (11) an dem ersten Abschnitt (TS1) der Getriebewelle,
zweites Befestigen der Mittel (12) zur Versorgung, Erfassung und Übertragung von durch den Dehnungsmessstreifen erzeugten Dehnungsmesswerten an dem zweiten Abschnitt (TS2) der Getriebewelle,
drittes Befestigen des feststehenden Teils (2) an einem festen Teil des Fahrzeugs, sodass er den Mitteln (12) zur Versorgung und Erfassung von Messwerten gegenüberliegt,
Verbinden des Dehnungsmessstreifens (11) mit den Mitteln (12) zur Erfassung und Übertragung der Messwerte mittels eines flexiblen Kabels (FC).

8. Verfahren nach Anspruch 7, wobei das Verbinden dadurch erfolgt, dass das flexible Kabel durch das Kugelgelenk geführt wird, sodass das flexible Kabel innerhalb der Getriebewelle verbleibt.

## Revendications

1. Arbre de transmission (TS) d'un véhicule comprenant un dispositif (MS) de mesure d'un couple appliqué audit arbre de transmission (TS), l'arbre de transmission comportant un joint à rotule (J) identifiant, de part et d'autre du joint, une première partie (TS1) de l'arbre de transmission soumise à une rotation avec déflexions et une seconde partie (TS2) de l'arbre de transmission soumise à une rotation uniquement autour de son axe de développement longitudinal fixe, le dispositif de mesure comprenant
- une partie mobile (1), configurée pour être fixée et pour tourner avec l'arbre de transmission et comprenant une jauge de contrainte (11), une solution (12) pour approvisionner en énergie la jauge de contrainte et pour collecter et transmettre les mesures d'extension générées par ladite jauge de contrainte (11),
- une partie fixe (2), configurée pour être fixée à une partie fixe du véhicule et pour faire face à ladite partie mobile afin de coopérer avec ladite solution (12) pour l'approvisionnement en énergie de la partie mobile et afin de recevoir les mesures d'extension,
ledit dispositif (MS) comprenant un câble flexible (FC) adapté pour interconnecter ladite jauge de contrainte et ladite solution (12), ladite jauge de contrainte (11) étant fixée sur ladite première partie (TS1) de l'arbre de transmission et ladite solution (12) sur ladite seconde partie (TS2) de l'arbre de transmission de sorte qu'une distance (GP) entre ladite solution (12) et ladite partie fixe (2) reste sensiblement constante dans n'importe quel état de fonctionnement de l'arbre de transmission (TS), dans lequel ledit câble flexible (FC) comporte des extrémités opposées munies d'un raccord rapide et dans lequel ladite jauge de contrainte (11) et ladite solution (12) comportent des prises complémentaires équipées dudit raccord rapide, ledit câble est dimensionné de sorte à disposer d'une longueur strictement nécessaire pour raccorder les parties susmentionnées en tenant compte des déflexions mutuelles entre les deux parties opposées (TS1, TS2).

2. Arbre selon la revendication 1, dans lequel ledit joint à rotule comprend une ouverture traversante pour loger ledit câble flexible (FC) et ledit câble flexible interconnecte la jauge de contrainte et la solution (12) en passant à l'intérieur de la première (TS1) et de la seconde partie (TS2) de l'arbre de transmission, à travers ladite ouverture traversante.

3. Véhicule (VHE), notamment un tracteur agricole, comprenant
. un moteur de propulsion (E),
. un arbre de transmission (TS) selon l'une quelconque des revendications 1 ou 2 pour transférer un mouvement de rotation dudit moteur de propulsion à une roue ou un essieu (AX) ou à une PDF du véhicule et
. une unité de traitement (ECU) configurée pour contrôler ledit moteur de propulsion et
. un réseau de données véhiculaire (CAN) interconnecté raccordant ladite partie fixe (2) à ladite unité de traitement (ECU),
et dans lequel l'unité de traitement et la partie fixe (2) sont configurées pour échanger réciproquement des données par l'intermédiaire du réseau de données véhiculaire.

4. Véhicule selon la revendication 3, dans lequel ladite unité de traitement est configurée pour limiter un couple appliqué audit arbre de transmission en contrôlant ledit moteur de propulsion sur la base d'au moins une mesure de couple effectuée par ledit dispositif de mesure de couple (MS).

5. Véhicule selon la revendication 3 ou la revendication 4, comprenant au moins deux essieux moteurs entraînés par un arbre de transmission respectif selon la revendication 4, et dans lequel ladite unité de traitement est configurée pour identifier une répartition de poids en comparant les paires réparties simultanément sur lesdits au moins deux essieux de remorquage du véhicule lorsque le véhicule est de niveau.

6. Un véhicule selon la revendication 5, dans lequel lorsqu'un premier couple réparti sur un premier essieu est supérieur à un second couple réparti sur un second essieu d'un seuil prédéterminé, alors ladite unité de traitement est configurée pour signaler à un conducteur du véhicule une mauvaise répartition du poids entre les au moins deux essieux de remorquage du véhicule.

7. Procédé de contrôle d'un couple appliqué à un arbre de transmission (TS) d'un véhicule par un moteur de propulsion, comprenant les étapes consistant à mesurer un couple appliqué à l'arbre de transmission et à limiter un couple généré par le moteur de propulsion selon le couple mesuré ; l'arbre de transmission étant muni d'un joint à rotule (J) identifiant, de part et d'autre du joint, une première partie (TS1) de l'arbre de transmission soumise à une rotation avec déflexions et une seconde partie (TS2) de l'arbre de transmission soumise à une rotation uniquement autour d'un axe de rotation fixe,
le procédé comprenant les étapes préliminaires suivantes pour fournir un arbre de transmission selon la revendication 1 :
- premièrement, la fixation de la jauge de contrainte (11) sur ladite première partie (TS1) de l'arbre de transmission,
- deuxièmement, la fixation de la solution d'approvisionnement (12), de collecte et de transmission des mesures d'extension générées par la jauge de contrainte, sur ladite seconde partie (TS2) de l'arbre de transmission,
- troisièmement, la fixation de la partie fixe (2) sur une partie fixe du véhicule de manière à faire face à ladite solution (12) d'approvisionnement et de collecte des mesures ;
- l'interconnexion de la jauge de contrainte (11) avec ladite solution (12) de collecte et de transmission des mesures, à l'aide d'un câble flexible (FC).

8. Procédé selon la revendication 7, dans lequel ladite interconnexion est effectuée en faisant passer ledit câble flexible à travers ledit joint à rotule de sorte que le câble flexible reste à l'intérieur de l'arbre de transmission.
